# EUROPÄISCHE PATENTSCHRIFT

(11) **EP 1 596 095 B1**
(45) Veröffentlichungstag und Bekanntmachung des Hinweises auf die Patenterteilung: **20.08.2008**
(21) Anmeldenummer: 05009740.1
(22) Anmeldetag: 04.05.2005
(51) Int. Cl.: F16F 9/36

(54) **Kolben-Zylinder-Aggregat**
Piston-cylinder-aggregate
Agrégat à piston-cylindre

(30) Priorität: 06.05.2004 DE 102004022409
(43) Veröffentlichungstag der Anmeldung: 16.11.2005
(73) Patentinhaber: ZF FRIEDRICHSHAFEN AG, 88046 Friedrichshafen (DE)
(72) Erfinder: Müller, Michael, 53773 Hennef (DE); Heinisch, Manfred, 53783 Eitorf (DE); Tantius, Andreas, 53842 Troisdorf (DE)

(56) Entgegenhaltungen:
- DE-A1- 2 905 928
- DE-A1- 3 117 493
- DE-A1- 4 115 382
- DE-A1- 10 141 216
- DE-U1- 8 205 342

## Beschreibung

Die Erfindung bezieht sich auf ein Kolben-Zylinder-Aggregat mit einem, an einer Kolbenstange befestigten Kolben, der einen Zylinder in zwei mit Dämpfungsflüssigkeit gefüllte Arbeitsräume unterteilt, einer Kolbenstangenführungen durch die die Kolbenstange abgedichtet nach außen geführt wird, sowie ein Mantelrohr, welches koaxial zum Zylinder angeordnet ist und zusammen mit dem Zylinder einem Ausgleichsraum bildet.

Es sind bereits Schwingungsdämpfer bekannt, bei denen die Kolbenstange mittels einer Kolbenstangenführung und einer entsprechenden Dichtung zur Atmosphäre hinaus geführt wird (DE 33 00 771 C1), wobei weitere Kolbenstangenführungen für Gasdruckdämpfer in Zweirohr-Teleskop-Bauart ebenfalls bekannt sind (DE 32 13 458 C2), wobei sich alle diese Kolbenstangendichtungen dadurch auszeichnen, dass die Abdichtung gegenüber der Kolbenstange über eine, mittels einer Feder, vorgespannten Dichtlippe bezieht. Derartige Konstruktionen besitzen den Nachteil einer höheren Reibung sowie hohe Losbrechkräfte wie auch eine ungünstige Gleitreibung.

Des Weiteren ist ein Gasdruckdämpfer bekannt, der in Reihe eine Kolbenstangendichtung und eine Kältedichtung aufweist. Die Kältedichtung ist für extrem niedrige Temperaturen gedacht und ergänzt die eigentliche Kolbenstangendichtung. Die Dichtlippe der eigentlichen Kolbenstangendichtung ist mittels einer Feder vorgespannt, so dass mit erhöhter Reibung zu rechnen ist.

Darüber hinaus ist ein Kolben-Zylinder-Aggregat bekannt (z.B. DE 82 04 342 U1), bei dem die die Kolbenstange abdichtende Dichtung in einem Winkelring (Blechformteil) angeordnet und von einem weiteren elastischen Ring vorgespannt ist. Im Bereich zwischen dem Winkelring und der Kolbenstangenführung sind Strömungsverbindungen (Durchbrechungen) vorgesehen.

Weitere Dichtungen (z.B. DE 101 41 216, DE 31 17 493) sind so angeordnet, dass die Aufnahme der Dichtung in den benachbarten Bauteilen jeweils toleranzbehaftet ist, so dass die Funktionssicherheit erheblichen Streuungen unterworfen ist.

Aufgabe der Erfindung ist es, ein Kolben-Zylinder-Aggregat zu schaffen, bei dem der Kolben über eine Kolbenstangenführung zur Atmosphäre hinaus geführt wird, wobei jedoch einerseits die Kolbenstangenführung konstruktiv optimiert wird und andererseits die eigentlichen Dichtungen gegenüber der Kolbenstange in ihrem Reibverhalten verbessert werden.

Zur Lösung dieser Aufgabe ist erfindungsgemäß vorgesehen, dass die die Kolbenstange abdichtende Dichtung in einem Winkelring angeordnet und von einem weiteren elastischen Ring vorgespannt ist, wobei der Winkelring in einer Ausnehmung der Kolbenstangenführung angeordnet ist und im Bereich zwischen dem Winkelring und der Kolbenstangenführung Strömungsverbindungen vorgesehen sind, und dass oberhalb des Winkelringes eine Armierungsscheibe in der Ausnehmung der Kolbenstangenführung aufgenommen ist, die gegenüber dem Winkelring abdichtet.

Vorteilhaft ist dabei, dass durch die Anordnung und Zusammenstellung der einzelnen Komponenten bei gleichen Bauraumverhältnissen, gleicher Anzahl bzw. auch weniger Bauteilen eine erhöhte Funktionsbreite erzielt werden kann. Die einzelnen Bauteile wirken dabei in der Form zusammen, dass die Funktion unabhängig vom Druck und/oder dem Medium gewährleistet ist. Des Weiteren ist von Vorteil, dass ein Austausch von Gas oder Dämpfungsmittel, welches die Dichtung nicht passieren kann, aus dem Arbeitsraum in den Ausgleichsraum zwischen dem Winkelring und der Kolbenstangenführung erfolgen kann.

Nach einem Merkmal ist vorgesehen, dass die Ausnehmung zylindrisch oder vieleckig ausgebildet ist.

Eine geringere Reibung sowie geringere Losbrechkräfte und eine niedrige Gleitreibung wird dadurch erzielt, dass die Dichtung aus einem PTFE-Gemisch hergestellt ist.

Zur Vereinfachung der aufzubringenden Spannung auf den Dichtring ist vorgesehen, dass als elastischer Ring ein O-Ring vorgesehen ist. Der O-Ring ermöglicht darüber hinaus die radiale Bewegung der PTFE-Dichtung bei auftretenden Seitenkräften.

Nach einer weiteren günstigen Konstruktionsausführung ist vorgesehen, dass die Dichtung von der Armierungsscheibe abgedeckt ist, welche mindestens eine weitere Dichtung zur Abdichtung gegenüber der Kolbenstangenführung aufweist. Mit Vorteil ist dabei vorgesehen, dass die Armierungsscheibe eine Dichtung zur Abdichtung des Ausgleichsraumes aufweist oder dass die Armierungsscheibe einen an der Kolbenstange angreifenden Abstreifer aufweist.

Eine günstige Ausführungsform sieht vor, dass die Dichtung mindestens eine Dichtlippe aufweist. Vorteilhaft ist hierbei, dass durch die Dichtung eine Verbesserung der Gesamtfunktion des Dämpfers erzielt werden kann.

Eine weitere Verringerung der Bauteile wird dadurch erzielt, dass der Ring Bestandteil der Armierungsscheibe ist. Dabei lässt sich auch der Ring an der Armierungsscheibe unlösbar befestigen.

Nach einem weiteren wesentlichen Merkmal ist vorgesehen, dass die Dichtung als Rückschlagventil eine Strömung vom Arbeitsraum in den Ausgleichsraum zulässt.

Des weiteren ist vorgesehen, dass die Dichtfläche einen Gaseintritt aus der Umwelt verhindert. Hierbei ist von Vorteil, dass ein Gaseintritt aus der Umwelt des Kolben-Zylinder-Aggregates oder auch der Gasdruck aus einer Luftfeder verhindert wird.

Bevorzugte Ausführungsbeispiele der Erfindung sind in den Zeichnungen schematisch dargestellt.

Es zeigt:
Figur 1 ein Kolben-Zylinder-Aggregat im Schnitt
Figur 2 eine Kolbenstangenführung als Einzelheit
Figur 2a einen Teilbereich der Kolbenstangenführung in vergrößertem Maßstab im Schnitt.

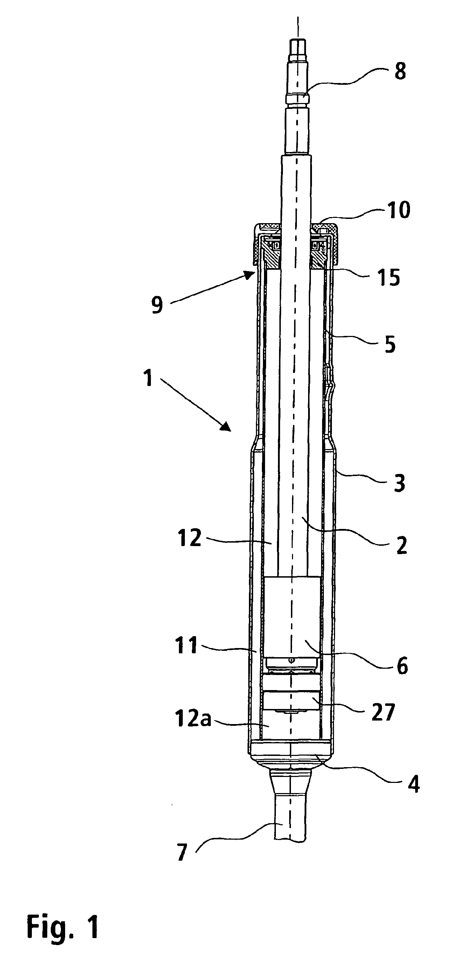

Das in Figur 1 dargestellte Kolben-Zylinder-Aggregat 1 besteht im wesentlichen aus dem Zylinder 5, in dem die Kolbenstange 2 über eine Kolbenstangenführung 15 in den Zylinder 5 eintaucht und der an der Kolbenstange 2 befestigte Dämpfungskolben 27 den Zylinder 5 in zwei Arbeitsräume 12 und 12a unterteilt.

Der Zylinder 5 wird koaxial von einem Mantelrohr 3 umschlossen, wobei zwischen dem Zylinder 5 und dem Mantelrohr 3 der Ausgleichsraum 11 gebildet wird. Das Kolben-Zylinder-Aggregat 1 ist nach unten über einen Behälterboden 4 verschlossen, an dem ein Befestigungselement 7 angeordnet ist. Im Bereich des Dämpfungskolbens 27 sind noch die Kolbenventile 6 angeordnet.

Die Kolbenstangenführung 15 ist Bestandteil der Führungs- und Dichtungseinheit 9, wobei das Mantelrohr 3 im Bereich der Kolbenstangenführung 15 über eine Schutzkappe 10 verschlossen ist und am Endbereich der Kolbenstange 2 befindet sich noch ein Befestigungszapfen 8 zur Fixierung des Kolben-Zylinder-Aggregates 1 im Fahrzeug.

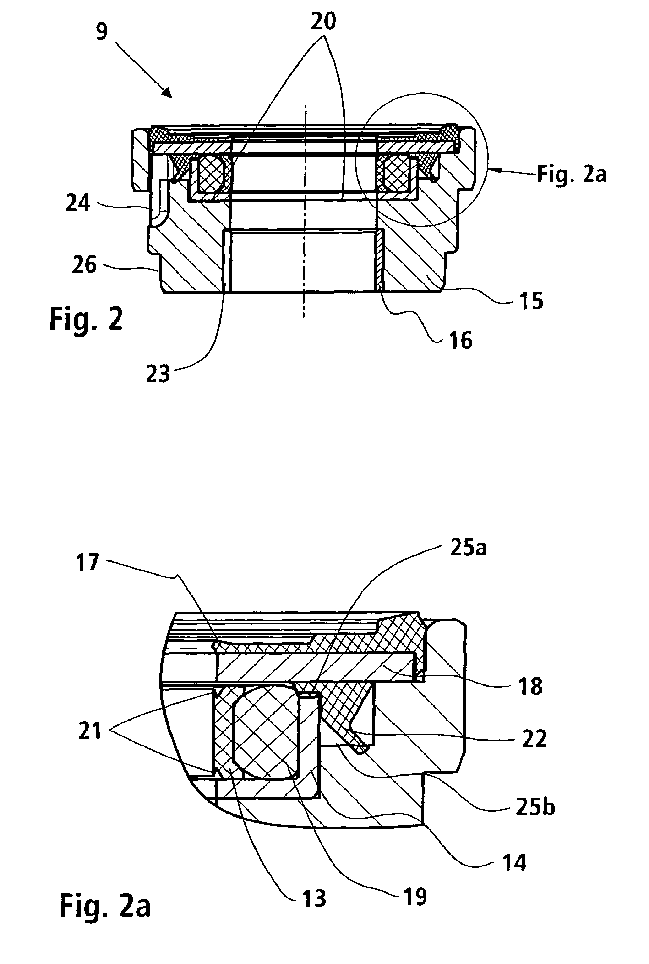

Die Figur 2 zeigt als Einzelheit eine Führungs- und Dichtungseinheit 9, wobei die Kolbenstangenführung 15 mit einer Führungsbuchse 16 zur Führung der Kolbenstange 2 versehen ist. Es handelt sich bei der Führungsbuchse 16 um eine geschlitzte Buchse, deren Stoßspalt 23 nach der Montage geschlossen ist. Die Zylinderrohraufnahme 26 dient zur Aufnahme des Zylinders 5 und dichtet an dieser Stelle den Arbeitsraum 12 gegenüber dem Ausgleichsraum 11 ab. Im oberen Bereich der Kolbenstangenführung 15 mit dem größten Außendurchmesser wird das Mantelrohr 3 gehalten.

Zwischen dem Winkelring 14 und der Kolbenstangenführung 15 sind Strömungsverbindungen 20 angeordnet, die einen Austausch von Dämpfungsmittel oder Gas vom Arbeitsraum 12 in den Ausgleichsraum 11 gewährleisten. Dieser Austausch erfolgt an der Dichtung 22 vorbei über Fenster 24, die über den Umfang verteilt in der Kolbenstangenführung 15 angeordnet sind.

Aus der Figur 2a ist als Einzelheit der Bereich der Kolbenstangenführung 15 dargestellt, wobei der Winkelring 14 zur Aufnahme des Ringes 19 sowie der Dichtung 13 ausgebildet ist. Der Ring 19 ist dabei als O-Ring hergestellt und dient der Erzeugung einer Vorspannung auf die Dichtung 13. Die Dichtung 13 ist mit Dichtlippen 21 zur einwandfreien Abdichtung der Kolbenstange gegenüber der Atmosphäre und dem Arbeitsraum 12 versehen. Axial oberhalb des Winkelringes 14 ist die Armierungsscheibe 18 wiederum in einer Ausnehmung der Kolbenstangenführung 15 aufgenommen, wobei eine Dichtfläche 25 a und/oder 25 b die Armierungsscheibe gegenüber dem Winkelring 14 abdichtet, die Dichtung 22 in Form eines Rückschlagventiles lediglich Dämpfungsmittel aus Richtung des Arbeitsraumes 12 kommend vorbei an den Fenstern 24 in den Ausgleichsraum 11 gelangen lässt. Oberhalb der Armierungsscheibe 18 ist ein elastischer Bereich vorgesehen, der zur Abdichtung der Schutzkappe 10 gegenüber der Kolbenstangenführung 15 bzw. dem Mantelrohr 3 herangezogen wird. Der Abstreifer 17 wirkt an der Kolbenstange 2 gegenüber der Atmosphäre, so dass hier Umwelteinflüsse gegenüber dem Arbeitsraum 12 abgehalten werden.

Der Ring 19 lässt sich problemlos mit der Armierungsscheibe 18 integrieren, so dass hier eine Baueinheit erzielt werden kann.

### Bezugszeichenliste

- 1 -: Kolben-Zylinder-Aggregat
- 2 -: Kolbenstange
- 3 -: Mantelrohr
- 4 -: Behälterboden
- 5 -: Zylinder
- 6 -: Kolbenventil
- 7 -: Befestigungselement
- 8 -: Befestigungszapfen
- 9 -: Führungs-/Dichtungseinheit
- 10 -: Schutzkappe
- 11 -: Ausgleichsraum
- 12 -: Arbeitsraum
- 13 -: Dichtung
- 14 -: Winkelring
- 15 -: Kolbenstangenführung
- 16 -: Führungsbuchse
- 17 -: Abstreifer
- 18 -: Armierungsscheibe
- 19 -: Ring
- 20 -: Strömungsverbindungen
- 21 -: Dichtlippe
- 22 -: Dichtung
- 23 -: Stoßspalt
- 24 -: Fenster
- 25 -: Dichtfläche
- 26 -: Zylinderrohraufnahme
- 27 -: Dämpfungskolben

## Patentansprüche

1. Kolben-Zylinder-Aggregat mit einem, an einer Kolbenstange befestigten Kolben, der einen Zylinder in zwei mit Dämpfungsflüssigkeit gefüllte Arbeitsräume unterteilt, einer Kolbenstangenführung durch die die Kolbenstange abgedichtet nach außen geführt wird, sowie ein Mantelrohr, welches koaxial zum Zylinder angeordnet ist und zusammen mit dem Zylinder einem Ausgleichsraum bildet,
**dadurch gekennzeichnet,**
**dass** die die Kolbenstange (2) abdichtende Dichtung (13) in einem Winkelring (14) angeordnet und von einem weiteren elastischen Ring (19) vorgespannt ist, wobei der Winkelring (14) in einer Ausnehmung der Kolbenstangenführung (15) angeordnet ist und im Bereich zwischen dem Winkelring (14) und der Kolbenstangenführung (15) Strömungsverbindungen (20) vorgesehen sind, und dass oberhalb des Winkelringes (14) eine Armierungsscheibe (18) in der Ausnehmung der Kolbenstangenführung (15) aufgenommen ist, die gegenüber dem Winkelring (14) abdichtet.

2. Kolben-Zylinder-Aggregat nach Anspruch 1,
**dadurch gekennzeichnet,**
**dass** die Ausnehmung zylindrisch oder vieleckig ausgebildet ist.

3. Kolben-Zylinder-Aggregat nach Anspruch 1,
**dadurch gekennzeichnet,**
**dass** die Dichtung (13) aus einem PTFE-Gemisch hergestellt ist.

4. Kolben-Zylinder-Aggregat nach Anspruch 1,
**dadurch gekennzeichnet,**
**dass** als elastischer Ring (19) ein O-Ring vorgesehen ist.

5. Kolben-Zylinder-Aggregat nach Anspruch 1,
**dadurch gekennzeichnet,**
**dass** die Dichtung (13) von der Armierungsscheibe (18) abgedeckt ist, welche mindestens eine weitere Dichtung zur Abdichtung gegenüber der Kolbenstangenführung aufweist.

6. Kolben-Zylinder-Aggregat nach Anspruch 5,
**dadurch gekennzeichnet,**
**dass** die Armierungsscheibe (18) eine Dichtung (22) zur Abdichtung des Ausgleichsraumes (11) aufweist.

7. Kolben-Zylinder-Aggregat nach Anspruch 5,
**dadurch gekennzeichnet,**
**dass** die Armierungsscheibe (18) einen an der Kolbenstange (2) angreifenden Abstreifer (17) aufweist.

8. Kolben-Zylinder-Aggregat nach Anspruch 1,
**dadurch gekennzeichnet**,
die Dichtung (13) mindestens eine Dichtlippe (21) aufweist.

9. Kolben-Zylinder-Aggregat nach Anspruch 1,
**dadurch gekennzeichnet,**
**dass** der Ring (19) Bestandteil der Armierungsscheibe (18) ist.

10. Kolben-Zylinder-Aggregat nach Anspruch 6,
**dadurch gekennzeichnet,**
**dass** die Dichtung (22) als Rückschlagventil eine Strömung vom Arbeitsraum (12) in den Ausgleichsraum (12) zulässt.

11. Kolben-Zylinder-Aggregat nach Anspruch 6,
**dadurch gekennzeichnet,**
**dass** die Dichtfläche (25 a oder 25 b) einen Gaseintritt aus der Umwelt verhindert.

## Claims

1. Piston/cylinder assembly having a piston which is fastened to a piston rod and divides a cylinder into two working chambers which are filled with damping fluid, having a piston-rod guide, by which the piston rod is guided in a sealed manner to the outside, and a casing tube which is arranged coaxially with respect to the cylinder and forms a compensation chamber together with the cylinder, **characterized in that** the seal (13) which seals the piston rod (2) is arranged in an angle ring (14) and is prestressed by a further elastic ring (19), the angle ring (14) being arranged in a recess of the piston-rod guide (15) and flow connections (20) being provided in the region between the angle ring (14) and the piston-rod guide (15), and **in that** a reinforcement disc (18) is received above the angle ring (14) in the recess of the piston-rod guide (15), which reinforcement disc (18) seals with respect to the angle ring (14).

2. Piston/cylinder assembly according to Claim 1, **characterized in that** the recess is of cylindrical or rectangular configuration.

3. Piston/cylinder assembly according to Claim 1, **characterized in that** the seal (13) is produced from a PTFE mixture.

4. Piston/cylinder assembly according to Claim 1, **characterized in that** an O-ring is provided as elastic ring (19).

5. Piston/cylinder assembly according to Claim 1, **characterized in that** the seal (13) is covered by the reinforcement disc (18) which has at least one further seal for sealing with respect to the piston-rod guide.

6. Piston/cylinder assembly according to Claim 5, **characterized in that** the reinforcement disc (18) has a seal (22) for sealing the compensation chamber (11).

7. Piston/cylinder assembly according to Claim 5, **characterized in that** the reinforcement disc (18) has a stripper (17) which acts on the piston rod (2).

8. Piston/cylinder assembly according to Claim 1, **characterized in that** the seal (13) has at least one sealing lip (21).

9. Piston/cylinder assembly according to Claim 1, **characterized in that** the ring (19) is a constituent part of the reinforcement disc (18).

10. Piston/cylinder assembly according to Claim 6, **characterized in that**, as a non-return valve, the seal (22) permits a flow from the working chamber (12) into the compensation chamber (12).

11. Piston/cylinder assembly according to Claim 6, **characterized in that** the sealing face (25a or 25b) prevents an entry of gas from the surroundings.

## Revendications

1. Ensemble cylindre-piston, comprenant un piston fixé à une tige de piston, qui divise un cylindre en deux chambres de travail remplies de liquide d'amortissement, un guide de tige de piston à travers lequel la tige de piston est guidée de manière hermétique vers l'extérieur, ainsi qu'un tube d'enveloppe qui est disposé coaxialement au cylindre et qui forme conjointement avec le cylindre une chambre de compensation,
**caractérisé en ce que**
le joint d'étanchéité (13) assurant l'étanchéité de la tige de piston (2) est disposé dans une bague coudée (14) et est précontraint par une autre bague élastique (19), la bague coudée (14) étant disposée dans un évidement du guide (15) de la tige de piston, et dans la région entre la bague coudée (14) et le guide (15) de la tige de piston étant prévues des connexions d'écoulement (20), et **en ce qu'**au-dessus de la bague coudée (14), un disque de renforcement (18) est reçu dans l'évidement du guide (15) de la tige de piston et réalise l'étanchéité par rapport à la bague coudée (14).

2. Ensemble cylindre-piston selon la revendication 1,
**caractérisé en ce que**
l'évidement est réalisé sous forme cylindrique ou polygonale.

3. Ensemble cylindre-piston selon la revendication 1,
**caractérisé en ce que**
le joint d'étanchéité (13) est fabriqué à partir d'un mélange de PTFE.

4. Ensemble cylindre-piston selon la revendication 1,
**caractérisé en ce que**
l'on prévoit comme bague élastique (19) un joint torique.

5. Ensemble cylindre-piston selon la revendication 1,
**caractérisé en ce que**
le joint d'étanchéité (13) est recouvert par le disque de renforcement (18) qui présente au moins un autre joint d'étanchéité pour réaliser l'étanchéité par rapport au guide de la tige de piston.

6. Ensemble cylindre-piston selon la revendication 5,
**caractérisé en ce que**
le disque de renforcement (18) présente un joint d'étanchéité (22) pour réaliser l'étanchéité de la chambre de compensation (11).

7. Ensemble cylindre-piston selon la revendication 5,
**caractérisé en ce que**
le disque de renforcement (18) présente un joint racleur (17) venant en prise avec la tige de piston (2).

8. Ensemble cylindre-piston selon la revendication 1,
**caractérisé en ce que**
le joint d'étanchéité (13) présente au moins une lèvre d'étanchéité (21).

9. Ensemble cylindre-piston selon la revendication 1,
**caractérisé en ce que**
la bague (19) fait partie du disque de renforcement (18).

10. Ensemble cylindre-piston selon la revendication 6,
**caractérisé en ce que**
le joint d'étanchéité (22) permet, en tant que soupape de non-retour, un écoulement de la chambre de travail (12) dans la chambre de compensation (11).

11. Ensemble cylindre-piston selon la revendication 6,
**caractérisé en ce que**
la surface d'étanchéité (25a ou 25b) empêche une entrée de gaz depuis l'environnement extérieur.
